# EUROPÄISCHE PATENTANMELDUNG

(11) **EP 1 650 113 A2**
(43) Veröffentlichungstag der Anmeldung: **26.04.2006**
(21) Anmeldenummer: 05109385.4
(22) Anmeldetag: 10.10.2005
(51) Int. Cl.: B62D 33/06, B60N 3/06, B60T 7/04, G05G 1/14

(54) **Anpassvorrichtung für eine Fahrzeugplattform**

(30) Priorität: 21.10.2004 DE 102004051256
(71) Anmelder: DEERE & COMPANY, Moline, Illinois 61265-8098 (US)
(72) Erfinder: Schläfer, Steffen, 67105 Schifferstadt (DE); Höfle, Jörg Jens, 64342 Jugenheim (DE)
(74) Vertreter: Holst, Sönke

(57) **Zusammenfassung**

Die vorliegende Erfindung betrifft eine Anpassungsvorrichtung für eine Fahrzeugplattform, insbesondere für eine Fahrzeugkabine. Die Fahrzeugplattform (10) weist einen Bedienersitz (12), mindestens ein Pedal (14), einen Plattformboden (16) und ein Lenkrad (18) auf. Die Fahrzeugplattform (10) ist vorzugsweise für ein landwirtschaftliches oder industrielles Nutzfahrzeug vorgesehen. Damit mehrere ergonomische Sitzpositionen einem Fahrzeugbediener zur Verfügung gestellt werden können, umfasst die Anpassungsvorrichtung (24) eine Einrichtung, mit der ein Bereich des Plattformbodens (16) unabhängig von der Position des Bedienersitzes (12) in der Höhe verstellbar ist. Der Plattformbodenbereich (26) erstreckt sich zumindest zwischen dem Bedienersitz (12) und einem Pedal (14). Des Weiteren betrifft die vorliegende Erfindung eine Fahrzeugplattform (10) und ein Landwirtschaftliches oder industrielles Nutzfahrzeug.

## Beschreibung

Die vorliegende Erfindung betrifft eine Anpassungsvorrichtung für eine Fahrzeugplattform, insbesondere für eine Fahrzeugkabine. Die Fahrzeugplattform weist einen Bedienersitz, mindestens ein Pedal, einen Kabinenboden und ein Lenkrad auf. Die Fahrzeugplattform ist vorzugsweise für ein landwirtschaftliches oder industrielles Nutzfahrzeug vorgesehen. Des Weiteren betrifft die vorliegende Erfindung eine Fahrzeugplattform und ein landwirtschaftliches oder industrielles Nutzfahrzeug.

Eine Fahrzeugplattform im Sinn der vorliegenden Erfindung ist eine Baugruppe eines Fahrzeugs, auf welchem sich ein Bediener des Fahrzeugs während des Betriebs zur Bedienung des Fahrzeugs befindet. Insbesondere Traktoren der kleineren Leistungsklasse oder des kleineren Preissegments sind mit offenen Fahrzeugplattformen vorgesehen, wobei unter dem Begriff "offene Plattform" insbesondere nicht eine vollständige Kabine mit Kabinenpfosten, Kabinendach und einer entsprechenden Verglasung zu verstehen ist. Dementsprechend und ganz besonders bevorzugt ist daher die vorliegende Erfindung auch für Fahrzeugkabinen einsetzbar, wobei eine Fahrzeugkabine im Allgemeinen eine Fahrzeugplattform mit Kabinenpfosten, Kabinendach und eine entsprechende Verglasung aufweist.

Anpassungsvorrichtungen der eingangs genannten Art sind seit langem aus dem Stand der Technik bekannt. Üblicherweise ist der Bedienersitz in einem Fahrzeug vertikal und/oder horizontal verstellbar, so dass die jeweilige Sitzposition eines Bedieners an seine Körpergröße bzw. an seine Körpermaße relativ zu den von ihm zu bedienenden Baugruppen, beispielsweise Pedale oder Lenkrad, angepasst werden kann. Auch ist es möglich, die Lenksäule zusammen mit dem Lenkrad im Winkel zu verstellen und/oder zu teleskopieren. Die Pedale im Fahrzeug oder in einer Fahrzeugkabine können ebenfalls in ihrer Position verstellbar angeordnet sein. Lediglich beispielhaft wird hierzu auf die DE 198 51 468 A1 oder die DE 199 52 236 A1 hingewiesen.

Im Bereich der Anpassung der Sitzplatzposition eines Bedieners an die Körpermaße des jeweiligen Fahrers ist es insbesondere bei landwirtschaftlichen Nutzfahrzeugen, beispielsweise bei Traktoren, Stand der Technik, dass der Bedienersitz vertikal und horizontal in seiner Position verstellbar ist und dass die Position der Lenksäule verschwenkbar und/oder teleskopierbar einstellbar ist. Die Pedale und/oder die Instrumente sind üblicherweise ortsfest bezogen zur Fahrzeugplattform angeordnet. Dementsprechend hat ein Bediener nur eine für den Bediener optimale und somit ergonomische Sitzposition in dem Fahrzeug. Diese Sitzposition ist insbesondere abhängig von der Erreichbarkeit der Pedale mit seinen Füßen. Dementsprechend wird er zunächst die Position des Bedienersitzes einstellen. Sodann ist es üblich, dass er die Position der Lenksäule an die Position des Bedienersitzes anpasst. Falls lediglich der Bedienersitz verstellbar und/oder die Lenksäule nicht verstellbar ist, kann in vielen Fällen lediglich eine Sitzposition gefunden werden, die ein Kompromiss aus Erreichbarkeit der Pedale und des Lenkrads darstellt. Diese Wahl der Sitzposition ist lediglich abhängig von den Körpermaßen des Bedieners und lässt ihm keine Variationsmöglichkeiten. Insoweit kann es vorkommen, dass ein Bediener keine ergonomische Sitzposition findet. Diese Sitzposition ist unkomfortabel oder lässt in gesundheitlicher oder sicherheitstechnischer Hinsicht zu wünschen übrig.

Der vorliegenden Erfindung liegt daher die Aufgabe zugrunde, eine Anpassungsvorrichtung der eingangs genannten Art anzugeben und weiterzubilden, durch welche die vorgenannten Probleme überwunden werden. Insbesondere sollen mehrere ergonomische Sitzpositionen einem Fahrzeugbediener zur Verfügung gestellt werden.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß ist eine Anpassungsvorrichtung der eingangs genannten Art gekennzeichnet durch eine Einrichtung, mit der ein Bereich des Plattformbodens oder des Kabinenbodens unabhängig von der Position des Bedienersitzes in der Höhe verstellbar ist. Der Plattformbodenbereich bzw. der Kabinenbodenbereich erstreckt sich zumindest zwischen dem Bedienersitz und einem Pedal.

Erfindungsgemäß ist zunächst erkannt worden, dass durch eine Verstellung des Plattformbodenbereichs zwischen Bedienersitz und Pedal dazu führt, dass die Bezugsposition für einen Bediener auf einer Fahrzeugplattform oder innerhalb einer Fahrzeugkabine selbst variierbar ist, und zwar unabhängig von der Position des Lenkrads, der Pedale und/oder des Bedienersitzes. Dementsprechend kann ein Bediener nicht lediglich eine, sondern viele für ihn optimale Sitzpositionen finden. Hierdurch kann eine nahezu optimale Sitzposition des Bedieners nicht nur in Abhängigkeit von seinen Körpermaßen gefunden und gewählt werden, sondern es können vielmehr in ganz besonders vorteilhafter Weise die zusätzlichen Freiheitsgrade zum Auffinden einer optimalen Sitzposition für einen bestimmten oder geplanten Betriebsmodus des Fahrzeugs genutzt werden. Insbesondere ist es für landwirtschaftliche Nutzfahrzeuge möglich, die Sitzposition auf die mit dem Fahrzeug jeweils zu verrichtenden Arbeiten einzustellen. So kann es beispielsweise bei Frontladerarbeiten durchaus sinnvoll sein, auf der Fahrzeugplattform weiter vorne und unter Umständen weiter unten zu sitzen, wohingegen es beim Anhängen eines Pflugs und beim Pflügen von Vorteil sein kann, weiter oben und weiter hinten auf der Fahrzeugplattform zu sitzen. Bei Straßenfahrten könnte grundsätzlich die höchstmögliche Sitzposition bevorzugt eingestellt werden, so dass optimale Sichtverhältnisse für den Bediener vorliegen. Insoweit kann mit der erfindungsgemäßen Anpassungsvorrichtung eine optimale Sitzposition bei einer optimierten Ergonomie in Abhängigkeit des jeweiligen Betriebsmodus des Fahrzeugs gefunden werden.

Gemäß einer besonders bevorzugten Ausführungsform ist der Plattformbodenbereich von der Einrichtung von einer unteren Position in eine maximale obere Position verstellbar. Dies könnte stufenlos erfolgen. In der unteren Position könnte der Plattformbodenbereich auf dem restlichen Plattformboden zumindest bereichsweise zur Anlage kommen.

So könnte die Einrichtung beispielsweise einen Parallelogrammhub- oder einen Scherenhubmechanismus aufweisen, mit welchem der Plattformbodenbereich in der Höhe verstellbar ist. Der Parallelogrammhub- oder Scherenhubmechanismus wäre hierzu einerseits am Boden der Fahrzeugplattform oder am Fahrzeugrahmen und andererseits am Plattformbodenbereich anzubringen.

Nicht zuletzt aus Sicherheitsgründen könnte der Plattformbodenbereich derart ausgebildet sein, dass Verletzungen eines Bedieners, welche beispielsweise in Form von Quetschungen hervorgerufen werden könnten, zumindest weitgehend vermieden werden. Des Weiteren könnten Mittel vorgesehen sein, mit welchen das Eindringen von Schmutz zumindest weitgehend vermeidbar ist. Diese Mittel könnten beispielsweise in Form von Dichtungen ausgeführt sein. Bevorzugt weist der Plattformbodenbereich insgesamt eine kastenförmige Bauweise oder eine zumindest zu einem Bediener hin geschlossene kastenförmige Bauweise auf.

Ganz besonders bevorzugt ist die Einrichtung bzw. die Anpassungsvorrichtung derart ausgestaltet, dass eine Höhenverstellung des Plattformbodenbereichs unabhängig von einer eventuellen Verstellung der Lenkradposition, der Bedienersitzposition und/oder der Pedalposition möglich ist. Mit anderen Worten ist es möglich, nur den Plattformbodenbereich in seiner Position zu verstellen, ohne andere Elemente oder Baugruppen der Fahrzeugplattform in ihrer Position zu verstellen.

Falls ein Fahrzeug von unterschiedlichen Bedienern benutzt wird, sollte es möglich sein, dass jeder Bediener die individuell auf ihn und/oder auf einen bestimmten Betriebsmodus des Nutzfahrzeugs optimierte Sitzposition möglichst schnell wieder auffinden bzw. einstellen kann. Hierzu könnte eine Speichereinrichtung vorgesehen sein, in welcher unterschiedliche Einstellungen zumindest der Anpassungsvorrichtung abspeicherbar sind. Diese unterschiedlichen Einstellungen könnten beispielsweise mit Hilfe einer Eingabeeinheit eingegeben und in der Speichereinrichtung abgespeichert und/oder wieder daraus abgerufen werden. Hierzu ist es erforderlich, dass die einzelnen Baugruppen der Fahrzeugplattform mittels Aktuatoren und beispielsweise durch das Betätigen entsprechender Bedienelemente an der Fahrzeugplattform einstellbar sind. Weiterhin muss die jeweilige Baugruppe bzw. deren Aktuator einen Positionssensor aufweisen, welcher die aktuelle Position der Baugruppe detektiert und der Speichereinrichtung zuführt. Sobald ein Bediener die einzelnen Baugruppen, beispielsweise die Position des Bedienersitzes, des Plattformbodenbereichs und der Lenksäule, optimal an seine Bedürfnisse angepasst hat, könnten diese Einstellungen durch die Betätigung einer entsprechenden Abspeichertaste in der Speichereinrichtung abgespeichert werden. Durch die Betätigung einer entsprechenden weiteren Taste könnte zu einem späteren Zeitpunkt oder bei einer erneuten Benutzung des Fahrzeugs die abgespeicherte Einstellung wieder abgerufen und von den Aktuatoren eingestellt werden. Diese Einstellung könnte jedoch durch eine manuelle Eingabe abweichend davon eingestellt werden.

Des Weiteren könnte vorgesehen sein, dass die Körpergröße eines Bedieners mittels einer Eingabeeinheit eingebbar ist. Hierauf können vorgebbare Einstellungen zumindest des Plattformbodenbereichs dem Bediener auf einer Ausgabeeinheit vorschlagbar sein, unter welchen der Bediener eine Einstellung auswählt, und wonach zumindest der Plattformbodenbereich die ausgewählte Einstellung einnimmt. Somit kann in vorteilhafter Weise einem Bediener, der das Fahrzeug das erste Mal benutzt, das Auffinden einer für ihn optimalen Einstellung erleichtert werden. Eine unmittelbare Einstellung des Plattformbodenbereichs nach der Eingabe der Körpergröße könnte ebenfalls vorgesehen sein, so dass das Vorschlagen möglicher Einstellungen entfallen kann.

Weiterhin könnten in der Speichereinrichtung Einstellungen für die Anpassungsvorrichtung für unterschiedliche Betriebsmodi abspeicherbar und/oder ermittelbar sein. Vom Bediener könnte mittels einer Eingabeeinheit ein Betriebsmodus des Nutzfahrzeugs vorgebbar sein, in welchem er beabsichtigt, das Fahrzeug zu benutzen. Sodann könnte zumindest der Plattformbodenbereich eine für den vorgegebenen Betriebsmodus optimierte bzw. ausgewählte Einstellung einnehmen. Auch hierdurch kann in ganz besonders vorteilhafter Weise das Auffinden einer optimalen Einstellung der einzelnen Baugruppen für einen beabsichtigten Betriebsmodus erleichtert werden. Mögliche Betriebsmodi eines landwirtschaftlichen oder industriellen Nutzfahrzeugs könnten beispielsweise eine Straßenfahrt, das Durchführen von Frontladerarbeiten oder Feldarbeiten umfassen.

In einer bevorzugten Ausführungsform ist nicht zuletzt aus Sicherheitsgründen vorgesehen, dass eine Verstellung der Höhe des Plattformbodenbereichs während mindestens eines Betriebsmodus des Nutzfahrzeugs nicht möglich ist. Ein solcher Betriebsmodus könnte beispielsweise der Fahrbetrieb sein. Somit kann z.B. verhindert werden, dass bei einem unbeabsichtigten Betätigen eines entsprechenden Bedienelements zur Verstellung des Plattformbodenbereichs dieser während des Fahrbetriebs verstellt wird.

In einer besonders bevorzugten Ausführungsform ist eine Steuereinrichtung vorgesehen, mit welcher eine Plausibilitätskontrolle zumindest zur Verstellung des Plattformbodenbereichs durchführbar ist. Dies ist insbesondere dann erforderlich, wenn mehrere Baugruppen auf der Fahrzeugplattform verstellbar angeordnet sind. So könnten beispielsweise sowohl die Pedale als auch der Plattformbodenbereich jeweils unabhängig voneinander verstellt werden. Hierbei könnten Situationen auftreten, in welchen beispielsweise sich der Plattformbodenbereich noch nicht in seiner obersten Position befindet, jedoch aufgrund der aktuell vorliegenden Positionseinstellung der Pedale nicht weiter nach oben bewegt werden kann, ohne an den Pedalen anzustoßen oder ohne genügend Freiraum zur Betätigung der Pedale zu belassen. Dementsprechend könnten alle möglichen Positionen der einzelnen verstellbar angeordneten Baugruppen der Fahrzeugplattform in der Speichereinrichtung abgespeichert sein, beispielsweise durch das Abspeichern der jeweiligen Verstellbereiche der verstellbar angeordneten Baugruppen samt deren äußeren Ausmaße.

Ganz besonders bevorzugt ist vorgesehen, einem Bediener möglichst viele Freiheitsgrade zur Einstellung einer optimalen Sitz- bzw. Arbeitsposition auf der Plattform bzw. in der Kabine zur Verfügung zu stellen. Hierzu könnten einzelne oder mehrere Baugruppen der Fahrzeugplattform ebenfalls verstellbar angeordnet sein. Beispielsweise könnte mindestens ein Pedal in vertikaler und/oder horizontaler Richtung in seiner Position verstellbar angeordnet sein. Dies könnte z.B. durch eine doppelte Parallelogrammlenkerführung oder durch eine Linearführung erfolgen. Weiterhin könnte das Lenkrad von einer Lenksäule geführt sein und die Lenksäule könnte teleskopierbar und/oder zumindest in einer Ebene verschwenkbar in ihrer Position verstellbar sein. Alternativ oder zusätzlich könnte der Bedienersitz in vertikaler und/oder horizontaler Richtung in seiner Position verstellbar sein. Idealerweise ist das verstellbar angeordnete Bauteil bzw. sind die verstellbar angeordneten Bauteile stufenlos in ihrer Position einstellbar, so dass alle möglichen Zwischenstellungen für einen Bediener zur Verfügung stehen.

Im Konkreten ist oder sind die Einrichtung, ein Pedal, die Lenksäule und/oder der Bedienersitz - vorzugsweise stufenlos - mechanisch oder elektrisch antreibbar. Eine hydraulische oder pneumatische Einstellung der Baugruppe wäre ebenfalls denkbar. Letztendlich können zur Einstellung der einzelnen Baugruppen gängige, auf dem Markt erhältliche Aktuatoren verwendet werden. Ganz besonders bevorzugt weist mindestens ein Aktuator einen Positionssensor auf, so dass die aktuell eingestellte Position einer Baugruppe aus der aktuellen Position des jeweiligen Aktuators bestimmbar ist und in einer Speichereinheit abgespeichert werden kann oder von einer Steuereinheit auf Plausibilität geprüft werden kann. Letzteres ist insbesondere dann erforderlich, wenn die Positionen sowohl der Pedale, der Lenksäule, des Bedienersitzes als auch des Plattformbodenbereichs jeweils unabhängig voneinander verstellt werden können. Hier könnten - wie bereits angedeutet - nämlich Situationen auftreten, in welchen beispielsweise sich der Plattformbodenbereich noch nicht in seiner obersten Position befindet, jedoch aufgrund der aktuell vorliegenden Positionseinstellung der Pedale nicht weiter nach oben bewegt werden kann, ohne an den Pedalen anzustoßen.

Die eingangs genannte Aufgabe bezüglich einer Fahrzeugplattform oder Fahrzeugkabine für ein landwirtschaftliches oder industrielles Nutzfahrzeug wird durch die Merkmale des Patentanspruchs 16 gelöst. Danach umfasst eine erfindungsgemäße Fahrzeugplattform oder eine erfindungsgemäße Fahrzeugkabine mindestens ein Pedal, einen Plattformboden, ein Lenkrad und eine Anpassungsvorrichtung nach einem der Patentansprüche 1 bis 15. Die eingangs genannte Aufgabe bezüglich eines landwirtschaftlichen oder industriellen Nutzfahrzeugs wird durch die Merkmale des Patentanspruchs 17 gelöst. Danach umfasst das Nutzfahrzeug eine Fahrzeugplattform oder eine Fahrzeugkabine, die mindestens ein Pedal, einen Plattformboden, ein Lenkrad und eine Anpassungsvorrichtung nach einem der Patentansprüche 1 bis 15 aufweist. Insoweit kann die erfindungsgemäße Anpassungsvorrichtung auf die speziellen Anforderungen an eine Fahrzeugplattform, an eine Fahrzeugkabine und/oder an ein landwirtschaftliches oder industrielles Nutzfahrzeug angepasst bzw. ausgebildet werden. Zur Vermeidung von Wiederholungen wird auf den vorangegangenen Teil der Beschreibung verwiesen.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Patentansprüche und andererseits auf die nachfolgende Erläuterung eines bevorzugten Ausführungsbeispiels der Erfindung anhand der Zeichnung zu verweisen. In Verbindung mit der Erläuterung des bevorzugten Ausführungsbeispiels der Erfindung anhand der Zeichnung werden auch im Allgemeinen bevorzugte Ausgestaltungen und Weiterbildungen der Lehre erläutert. In der Zeichnung zeigen jeweils in einer schematischen Darstellung
- Fig. 1: eine Seitenansicht einer Fahrzeugplattform, die einzelne Bauteile aufweist und
- Fig. 2: eine Seitenansicht eines erfindungsgemäßen Ausführungsbeispiels.

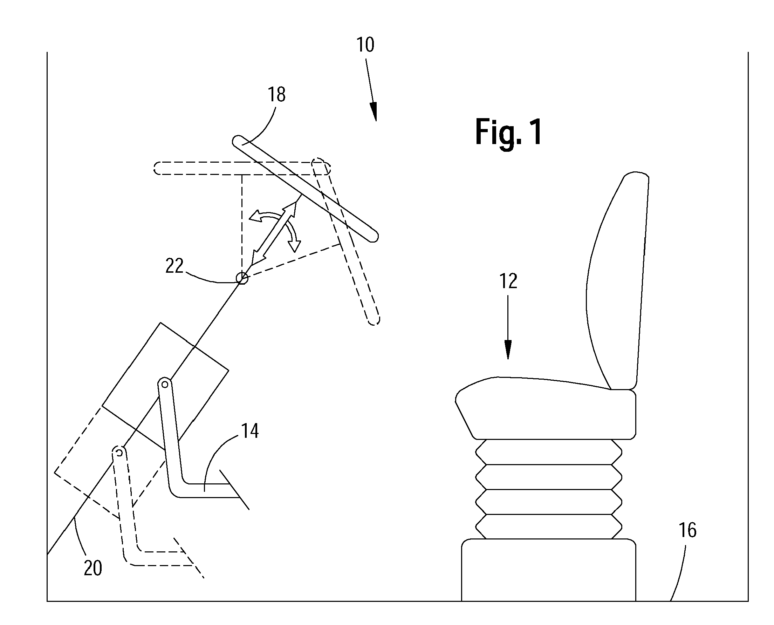

Fig. 1 zeigt in einer Seitenansicht einen Teil einer Fahrzeugplattform 10, welche einen Bedienersitz 12, Pedale 14, einen Plattformboden 16 und ein Lenkrad 18 aufweist. Der Bedienersitz 12 kann relativ zum Plattformboden 16 in der Höhe variabel eingestellt werden. Die Pedale 14, von denen aufgrund der Seitenansicht lediglich ein Pedal zu sehen ist, können ebenfalls in ihrer Position relativ zum Plattformboden 16 variabel eingestellt werden, und zwar entlang der Längsrichtung der Lenkwelle 20. Das Lenkrad 18 ist einerseits entlang der Richtung der Lenkwelle 20 teleskopierbar angeordnet und andererseits um den Schwenkpunkt 22 in der Zeichenebene verschwenkbar angeordnet, und kann somit ebenfalls variabel eingestellt werden. In Fig. 1 sind gestrichelt unterschiedliche Positionen einerseits der Pedale 14 und andererseits des Lenkrads 18 gezeigt. Ein Teleskopieren des Lenkrads ist ebenfalls möglich, was mit dem Pfeil in Richtung der Lenkwelle 20 angedeutet ist.

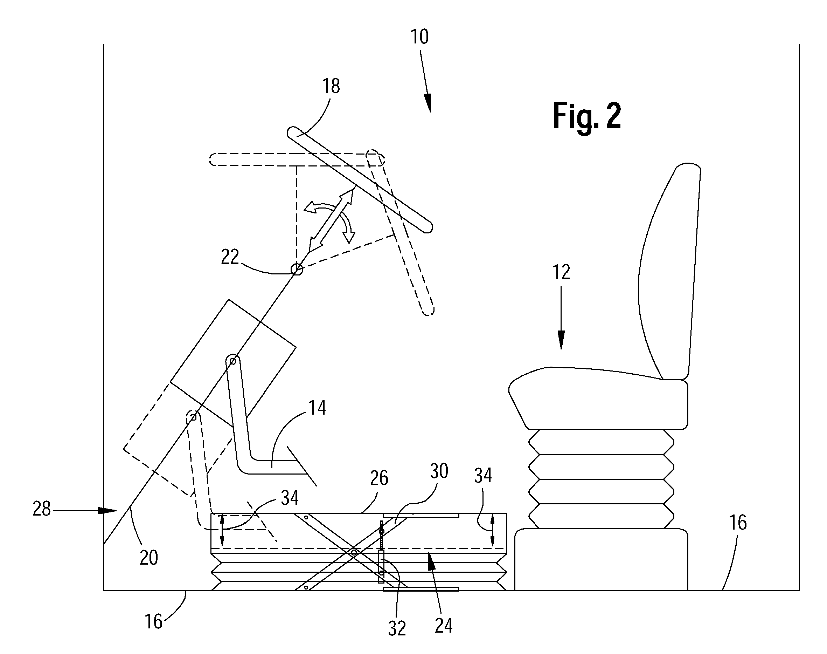

Fig. 2 zeigt in einer schematischen Darstellung einen Ausschnitt einer Fahrzeugkabine 10, welche eine erfindungsgemäße Anpassungsvorrichtung mit einer Einrichtung 24 aufweist. Die Fahrzeugkabine 10 umfasst eine Fahrzeugplattform mit einem Plattformboden 16 und ist der Einfachheit halber ebenfalls mit dem Bezugszeichen 10 gekennzeichnet. In der Fahrzeugkabine 10 gemäß Fig. 2 sind ebenfalls ein Bedienersitz 12, mehrere Pedale 14 und ein Lenkrad 18 vorgesehen, wobei all diese Baugruppen in ihrer Position relativ zur Fahrzeugkabine 10 bzw. zum Kabinenboden 16 verstellbar sind, und zwar in vergleichbarer Weise zu den entsprechenden Baugruppen aus Fig. 1.

Die erfindungsgemäße Anpassungsvorrichtung umfasst eine Einrichtung 24 und einen Kabinenbodenbereich 26, wobei letzterer stufenlos in der Höhe relativ zum Kabinenboden 16 verstellbar ist. Der Kabinenbodenbereich 26 ist kastenförmig ausgebildet und erstreckt sich über einen Bereich zwischen dem Bedienersitz 12 und zu den Pedalen 14 beziehungsweise bis nahezu zur Lenksäulenkonstruktion 28. Er ist derart ausgebildet, dass keine Verletzungsgefahr für einen Bediener besteht. Insbesondere sind zwischen der Fahrzeugkabine 10 und dem Kabinenbodenbereich 26 keine Zwischenräume vorgesehen, in welchen beispielsweise ein Fuß eines Bedieners bei einer Höhenverstellung des Kabinenbodenbereichs 26 eingeklemmt werden könnte. Der Kabinenbodenbereich 26 wird darüber hinaus auch derart bedient, dass bei einer motorisierten Höhenverstellung eine automatische Abschaltung erfolgt, sollte die Kraft zur Ausführung der Höhenverstellung des Kabinenbodenbereichs 26 einen vorgebbaren Wert überschreiten. Hierdurch kann zum Beispiel ein versehentliches Einklemmen bzw. eine Verletzung eines Bedienerfußes vermieden werden.

Der Kabinenbodenbereich 26 kann allein in der Höhe verstellt werden, mit anderen Worten völlig unabhängig von einer Verstellung beispielsweise der horizontalen und/oder vertikalen Position des Bedienersitzes 12, der Position der Pedale 14 oder des Lenkrads 18.

Die Höhenverstellung des Kabinenbodenbereichs 26 wird mit einem lediglich schematisch dargestellten Scherenhubmechanismus 30 bewirkt. Der Scherenhubmechanismus 30 wird von dem ebenfalls lediglich schematisch dargestellten elektromotor-angetriebenen Aktuator 32 verstellt, so dass der Kabinenbodenbereich 26 in der Höhe in Richtung der Doppelpfeile 34 verstellbar ist. Auch für den Kabinenbodenbereich 26 ist eine weitere Position in Fig. 2 gestrichelt eingezeichnet.

Abschließend sei ganz besonders darauf hingewiesen, dass das voranstehend erörterte Ausführungsbeispiel lediglich zur Beschreibung der beanspruchten Lehre dient, diese jedoch nicht auf die Ausführungsbeispiele einschränken.

## Patentansprüche

1. Anpassungsvorrichtung für eine Fahrzeugplattform, insbesondere für eine Fahrzeugkabine, wobei die Fahrzeugplattform (10) einen Bedienersitz (12), mindestens ein Pedal (14), einen Plattformboden (16) und ein Lenkrad (18) aufweist und wobei die Fahrzeugplattform (10) vorzugsweise für ein landwirtschaftliches oder industrielles Nutzfahrzeug vorgesehen ist, **gekennzeichnet durch** eine Einrichtung, mit der ein Bereich des Plattformbodens (26) unabhängig von der Position des Bedienersitzes (12) in der Höhe verstellbar ist, wobei der Plattformbodenbereich (26) sich zumindest zwischen dem Bedienersitz (12) und einem Pedal (14) erstreckt.

2. Anpassungsvorrichtung nach Anspruch 1, **dadurch gekennzeichnet, dass** der Plattformbodenbereich (26) von der Einrichtung von einer unteren Position in eine maximale obere Position verstellbar ist, vorzugsweise stufenlos.

3. Anpassungsvorrichtung nach Anspruch 1 oder 2, **dadurch gekennzeichnet, dass** die Einrichtung einen Parallelogrammhub- oder einen Scherenhubmechanismus aufweist, mit welchem der Plattformbodenbereich (26) in der Höhe verstellbar ist.

4. Anpassungsvorrichtung nach einem der Ansprüche 1 bis 3, **dadurch gekennzeichnet, dass** der Plattformbodenbereich (26) derart ausgebildet ist, dass Verletzungen eines Bedieners - beispielsweise in Form von Quetschungen - und/oder das Eindringen von Schmutz zumindest weitgehend vermeidbar sind, vorzugsweise durch eine zumindest zum Fahrzeugplattforminnern hin geschlossene kastenförmige Bauweise des Plattformbodenbereichs (26).

5. Anpassungsvorrichtung nach einem der Ansprüche 1 bis 4, **dadurch gekennzeichnet, dass** eine Höhenverstellung des Plattformbodenbereichs (26) unabhängig von einer eventuellen Verstellung der Lenkradposition, der Bedienersitzposition und/oder der Pedalposition möglich ist.

6. Anpassungsvorrichtung nach einem der Ansprüche 1 bis 5, **dadurch gekennzeichnet, dass** eine Speichereinrichtung vorgesehen ist, in welcher mittels einer Eingabeeinheit unterschiedliche Anpassungseinstellungen abspeicherbar sind, welche beispielsweise individuell auf einen Fahrer und/oder auf einen bestimmten Betriebsmodus des Nutzfahrzeugs optimiert sind.

7. Anpassungsvorrichtung nach einem der Ansprüche 1 bis 6, **dadurch gekennzeichnet, dass** die Körpergröße eines Bedieners mittels einer Eingabeeinheit eingebbar ist, worauf vorgebbare Einstellungen des Plattformbodenbereichs (26) dem Bediener auf einer Ausgabeeinheit vorschlagbar sind, unter welchen der Bediener eine Einstellung auswählt, und wonach zumindest der Plattformbodenbereich (26) die ausgewählte Einstellung einnimmt.

8. Anpassungsvorrichtung nach einem der Ansprüche 1 bis 7, **dadurch gekennzeichnet, dass** in der Speichereinrichtung Anpassungseinstellungen für unterschiedliche Betriebsmodi abspeicherbar oder ermittelbar sind, dass vom Bediener mittels einer Eingabeeinheit ein vorgesehener Betriebsmodus des Nutzfahrzeugs vorgebbar ist und dass zumindest der Plattformbodenbereich (26) eine für den vorgegebenen Betriebsmodus optimierte bzw. ausgewählte Einstellung einnimmt.

9. Anpassungsvorrichtung nach Anspruch 8, **dadurch gekennzeichnet, dass** ein möglicher Betriebsmodus des Nutzfahrzeugs eine Straßenfahrt, die Durchführung von Frontladerarbeiten oder Feldarbeiten umfasst.

10. Anpassungsvorrichtung nach einem der Ansprüche 1 bis 9, **dadurch gekennzeichnet, dass** eine Verstellung der Höhe des Plattformbodenbereichs (26) während mindestens eines Betriebsmodus des Nutzfahrzeugs nicht möglich ist, vorzugsweise im Fahrbetrieb.

11. Anpassungsvorrichtung nach einem der Ansprüche 1 bis 10, **dadurch gekennzeichnet, dass** eine Steuereinrichtung vorgesehen ist, mit welcher eine Plausibilitätskontrolle zumindest zur Verstellung des Plattformbodenbereichs (26) durchführbar ist.

12. Anpassungsvorrichtung nach einem der Ansprüche 1 bis 11, **dadurch gekennzeichnet, dass** mindestens ein Pedal (14) in vertikaler und/oder horizontaler Richtung in seiner Position verstellbar ist, vorzugsweise durch eine doppelte Parallelogrammlenkerführung oder durch eine Linearführung, insbesondere stufenlos.

13. Anpassungsvorrichtung nach einem der Ansprüche 1 bis 12, **dadurch gekennzeichnet, dass** das Lenkrad (18) von einer Lenksäule (28) geführt ist und dass die Lenksäule (28) teleskopierbar und/oder zumindest in einer Ebene verschwenkbar in ihrer Position verstellbar ist, insbesondere stufenlos.

14. Anpassungsvorrichtung nach einem der Ansprüche 1 bis 13, **dadurch gekennzeichnet, dass** der Bedienersitz (12) in vertikaler und/oder horizontaler Richtung in seiner Position verstellbar ist, insbesondere stufenlos.

15. Anpassungsvorrichtung nach einem der Ansprüche 1 bis 14, **dadurch gekennzeichnet, dass** die Einrichtung, ein Pedal (14), die Lenksäule (18) und/oder der Bedienersitz (12) mechanisch oder elektrisch antreibbar ist, vorzugsweise stufenlos.

16. Fahrzeugplattform - insbesondere Fahrzeugkabine - für ein landwirtschaftliches oder industrielles Nutzfahrzeug, mit mindestens einem Pedal (14), einem Plattformboden (16) und einem Lenkrad (18), **gekennzeichnet durch** eine Anpassungsvorrichtung (24) nach einem der Ansprüche 1 bis 15.

17. Landwirtschaftliches oder industrielles Nutzfahrzeug mit einer Fahrzeugplattform, insbesondere mit einer Fahrzeugkabine, mit mindestens einem Pedal (14), einem Plattformboden (16) und einem Lenkrad (18), **dadurch gekennzeichnet, dass** die Fahrzeugplattform (10) bzw. die Fahrzeugkabine eine Anpassungsvorrichtung (24) nach einem der Ansprüche 1 bis 15 aufweist.
